# EUROPEAN PATENT SPECIFICATION

(11) **EP 3 351 424 B1**
(45) Date of publication and mention of the grant of the patent: **17.07.2019**
(21) Application number: 17185880.6
(22) Date of filing: 11.08.2017
(51) Int. Cl.: B60N 2/28

(54) **SWIVEL MECHANISM OF CHILD SAFETY SEAT**
SCHWENKMECHANISMUS EINES KINDERSICHERHEITSSITZES
MÉCANISME DE PIVOTEMENT DE SIÈGE DE SÉCURITÉ ENFANT

(30) Priority: 23.01.2017 CN 201720084128 U
(43) Date of publication of application: 25.07.2018
(73) Proprietor: MAX-INF Ningbo Baby Product Co. Ltd., Ningbo City Zhejiang (CN)
(72) Inventor: Xu, Lihong, Ningbo City, Zhejiang (CN); Wang, Jirun, Ningbo City, Zhejiang (CN)
(74) Representative: Schwerbrock, Florian

(56) References cited:
- EP-A1- 1 247 688
- WO-A1-90/03746
- WO-A1-2015/025434
- GB-A- 2 403 138

## Description

### BACKGROUND OF THE INVENTION

### 1. Field of the Invention

The invention relates to child safety seats and more particularly to a swivel mechanism of a child safety seat, the swivel mechanism including a seat assembly and a swivel assembly mounted from below.

### 2. Description of Related Art

Conventionally, a seat assembly is provided below a child safety seat. It is understood that a child may grow fast. Thus, it is desirable of easily adjusting an angle of the seat assembly with respect to the child safety seat. The seat assembly is capable of rotating horizontally and/or vertically, thereby being multifunctional. However, the angle adjustment mechanism is very complicated, difficult of being operated, and prone to malfunction.

It is also understood that a child may sleep in a seat of a running car. Thus, it is required to rotate the child safety seat 180-degree prior to fastening it. As such, there is a little enclosed space between the child safety seat and the car seat. This ensures safety of a child seated in the child safety seat while driving. Otherwise, the child may be thrown out of the car. However, the swivel mechanism is also provided in the limited space between the seat assembly and the child safety seat Further, the swivel mechanism is complicated and difficult of being operated.

GB 2403138 discloses a child safety seat for use with a vehicle seat. The child safety seat comprises a base 229 arranged for secure fitting to a vehicle seat; a child seat 204 arranged for secure placement of a child therein; and a mounting for mounting the child seat 204 to the base 229. The mounting provides for both reversible lateral movement of the child seat 204 relative to the base 229 from an initial position to one or more reclined positions and reversible rotational movement of the child seat 204 relative to the base 229 to a loading position, which enables ease of placement of a child in the child seat 204. There is also provided a base 229, child seat 204 and mounting for use in child safety seat as separate components or as a kit of parts.

However, GB'138 does not provide adjustment of vertical displacement of the child seat 204. As a result, the child seat 204 cannot be adjusted to the best position in height. This really causes a problem.

### SUMMARY OF THE INVENTION

The invention has been made in an effort to solve the problems of the prior art including complicated angle adjustment mechanism, difficult of being operated, uneasy installation and prone to malfunction by providing a swivel mechanism of a child safety seat.

It is therefore an object of the invention to provide a swivel mechanism of a child safety seat, characterized by comprising a seat assembly including a cover, a frame, and a base having first and second limiting receptacles on an underside; and a swivel assembly disposed below the base and including a positioning sliding block, a biasing member secured to the positioning sliding block, and an intermediate shaft disposed through the base. A conventional single, complicated mechanism is replaced by two separate parts. The conventional vertical rotation function is kept with the conventional horizontal rotation function replaced by a mechanism involving a cooperation of the seat assembly and the swivel assembly. The structure is simple. Operation is simple. It is durable.

Preferably, the swivel assembly further comprises two latches extending outward, and two push buttons for manually locking or unlocking the latches respectively. Alternatively, the locking or unlocking of the latches is done by activating the push buttons by electro-magnetic means. The latches further insert into limiting receptacles of the car seat.

Preferably, the positioning sliding block includes two shoulders configured to lockingly insert into the first limiting receptacle or the second limiting receptacle. The shoulders are specifically designed for being locked in the first or second limiting receptacle.

Preferably, the positioning sliding block includes a bottom groove configured to accommodate the hand.

The invention has the following advantageous effects in comparison with the prior art: simplification of complicated structure, additional swivel assembly, separation of the adjustment mechanism and the swivel assembly, simple installation, easy operation, and durability.

The above and other objects, features and advantages of the invention will become apparent from the following detailed description taken with the accompanying drawings.

### BRIEF DESCRIPTION OF THE DRAWINGS

FIG. 1 is an exploded view of a swivel mechanism of a child safety seat according to the invention, the swivel mechanism including a seat assembly and a swivel assembly;
FIG. 2 is a longitudinal sectional view of the assembled swivel assembly and the seat assembly;
FIG. 3 is a view similar to FIG. 2 showing the swivel assembly pulled to a lowest position;
FIG. 4 is a view similar to FIG. 3 showing the swivel assembly rotating 180-degree about the shaft;
FIG. 5 is a perspective view of the swivel mechanism shown in FIG. 2;
FIG. 6 is a view similar to FIG. 5 with the swivel assembly being pulled away from the base;
FIG. 7 is a view similar to FIG. 6 showing the swivel assembly rotating 90-degree about the shaft;
FIG. 8 is a view similar to FIG. 7 showing the swivel assembly rotating 180-degree about the shaft; and
FIG. 9 is a view similar to FIG. 8 showing the swivel assembly pushed upward to secure to the base by locking.

### DETAILED DESCRIPTION OF THE INVENTION

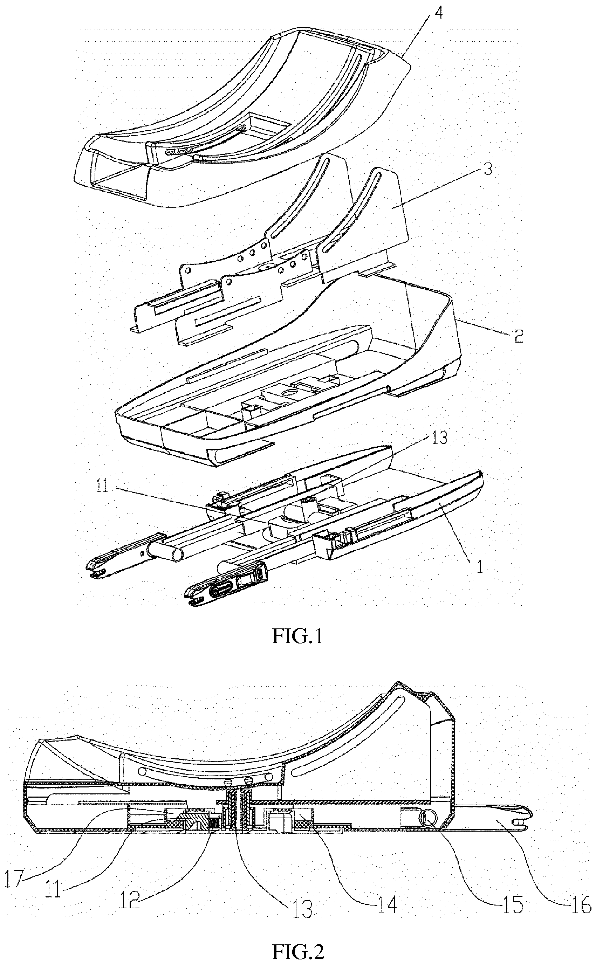

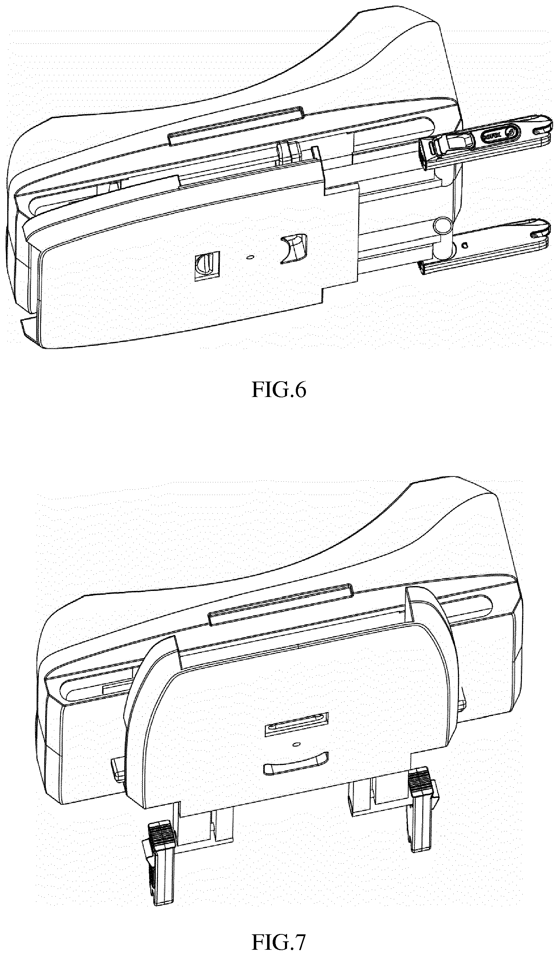

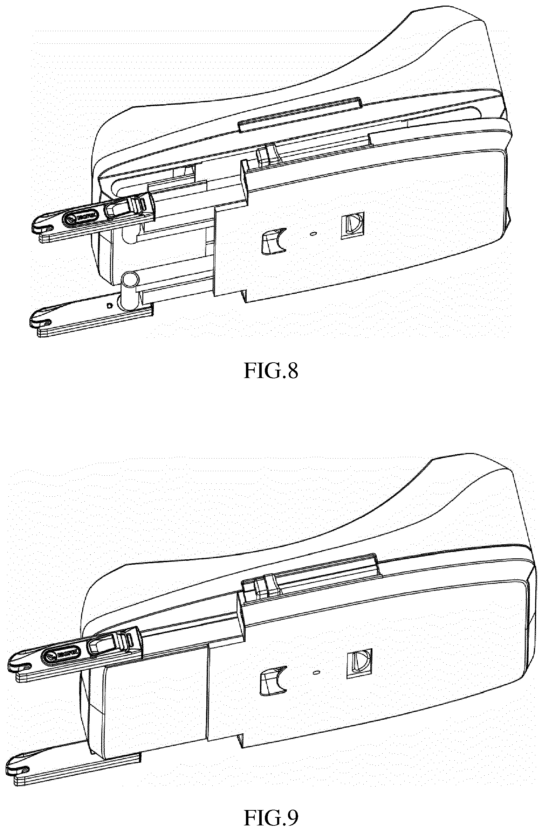

Referring to FIGS. 1 to 9, a swivel mechanism of a child safety seat in accordance with the invention is shown and comprises the following components as discussed in detail below.

A seat assembly comprises a cover 4, a base 2, and a frame 3 mounted between the cover 4 and the base 2. An underside of the base 2 is formed with a first limiting receptacle 17 and a second limiting receptacle 14 opposing the first limiting receptacle 17. A swivel assembly 1 is provided below the base 2 and includes a central positioning sliding block 11 between the first limiting receptacle 17 and the second limiting receptacle 14, a torsion spring 12 secured to the positioning sliding block 11, an intermediate shaft 13 disposed through a central portion of the base 2, two latches 16 extending outward, two push buttons 15 for locking or unlocking the latches 16 respectively, two shoulders of the positioning sliding block 11 configured to lockingly insert into the first limiting receptacle 17 (or the second limiting receptacle 14), and a bottom groove formed on the positioning sliding block 11. Further, on a bottom of the swivel assembly 1 there are provided a through hole corresponding to the bottom groove, and a handle for pulling, pushing or rotating the swivel assembly 1.

In use, the hand is placed in the groove. Next, the hand exerts a force to push the positioning sliding block 11. And in turn, the torsion spring 12 is compressed. The shoulders of the positioning sliding block 11 thus clear the first limiting receptacle 17. As a result, the swivel assembly 1 is free to rotate.

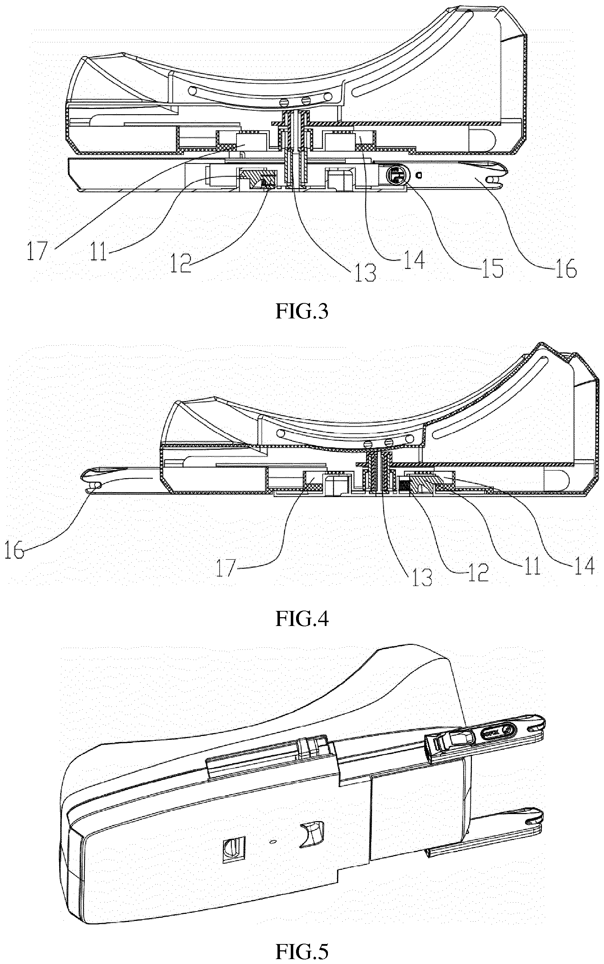

There is a sleeve in the base 2 for placing on the shaft 13. As shown in FIG. 3, a fastening element is provided in the sleeve of the base 2 and a complimentary fastening element is provided on the shaft 13 for releasably securing to the fastening element. When the swivel assembly 1 is pulled to a lowest position, the swivel assembly 1 is capable of rotating 180-degree about the shaft 13.

After rotating 180-degree, the positioning sliding block 11 is still being pushed and the torsion spring 12 is compressed. Next, the swivel assembly 1 is pushed up toward the base 2. And in turn, the shaft 13 enters the sleeve of the base 2 again to secure to the base 2. Thereafter, the positioning sliding block 11 is released and the energized torsion spring 12 pushes the positioning sliding block 11 into the second limiting receptacle 14. As a result, the positioning sliding block 11 is locked in the second limiting receptacle 14.

While the invention has been described in terms of preferred embodiments, those skilled in the art will recognize that the invention can be practiced with modifications within the scope of the appended claims.

## Claims

1. A swivel mechanism of a child safety seat, comprising:
a seat assembly including a cover (4), a frame (3), and a base (2) having first and second limiting receptacles (17, 14) on an underside; and
a swivel assembly (1) disposed below the base (2) and including a positioning sliding block (11), a biasing member (12) secured to the positioning sliding block (11), and an intermediate shaft (13) disposed through the base (2);
**characterized in that** the base (2) has a sleeve for placing on the shaft (13), a fastening element is provided in the sleeve of the base (2), a complementary fastening element is provided on the shaft (13) for releasably securing to the fastening element, when the swivel assembly (1) is pulled to a lowest position, the swivel assembly (1) is capable of rotating 180 degrees about the shaft (13) and the shaft (13) enters the sleeve of the base (2) again.

2. The swivel mechanism of claim 1, **characterized in that** the swivel assembly (1) further comprises two latches (16) extending outward, and two push buttons (15) for locking or unlocking the latches (16) respectively.

3. The swivel mechanism of claim 1, **characterized in that** the positioning sliding block (11) has two shoulders configured to lockingly insert into the first limiting receptacle (17) or the second limiting receptacle (14).

4. The swivel mechanism of claim 1, **characterized in that** the positioning sliding block (11) includes a bottom groove configured to accommodate the hand.

## Patentansprüche

1. Schwenkmechanismus eines Kindersitzes, umfassend:
eine Sitzbaugruppe mit einer Abdeckung (4), einem Rahmen (3) und einer Basis (2), die eine erste und eine zweite Begrenzungsaufnahme (17, 14) an einer Unterseite aufweist; und
eine Schwenkbaugruppe (1), die unter der Basis (2) angeordnet ist und einen Positionierungsgleitblock (11), ein Vorspannelement (12), das am Positionierungsgleitblock (11) befestigt ist, und einen Zwischenschaft (13) beinhaltet, der durch die Basis (2) verlaufend angeordnet ist;
**dadurch gekennzeichnet, dass** die Basis (2) eine Hülse zum Anordnen an dem Schaft (13) aufweist, ein Befestigungselement in der Hülse der Basis (2) vorgesehen ist, ein komplementäres Befestigungselement am Schaft (13) zum lösbaren Befestigen am Befestigungselement vorgesehen ist, wobei die Schwenkbaugruppe (1) sich um 180 Grad um den Schaft (13) drehen kann, wenn die Schwenkbaugruppe (1) in eine unterste Position gezogen wird, und der Schaft (13) erneut in die Hülse der Basis (2) eintritt.

2. Schwenkmechanismus nach Anspruch 1, **dadurch gekennzeichnet, dass** die Schwenkbaugruppe (1) ferner zwei Riegel (16), die sich nach außen erstrecken, und zwei Drucktasten (15) zum Verriegeln bzw. Entriegeln der Riegel (16) umfasst.

3. Schwenkmechanismus nach Anspruch 1, **dadurch gekennzeichnet, dass** der Positionierungsgleitblock (11) zwei Schultern aufweist, die dazu ausgestaltet sind, verriegelnd in die erste Begrenzungsaufnahme (17) oder die zweite Begrenzungsaufnahme (14) eingeführt zu werden.

4. Schwenkmechanismus nach Anspruch 1, **dadurch gekennzeichnet, dass** der Positionierungsgleitblock (11) eine Bodennut beinhaltet, die dazu ausgestaltet ist, die Hand aufzunehmen.

## Revendications

1. Un mécanisme pivotant de siège de sécurité enfant, comprenant :
un ensemble siège comportant une enveloppe (4), un cadre (3), et une base (2), doté d'un premier et d'un deuxième réceptacles limitatifs (17, 14) sur une partie inférieure ; et
un ensemble pivotant (1) agencé sous la base (2) et comportant un bloc de positionnement coulissant (11), un élément poussoir (12) sécurisé sur le bloc de positionnement coulissant (11), et un arbre intermédiaire (13) agencé à travers la base (2) ;
**caractérisé en ce que** la base (2) est dotée d'un manchon de placement sur l'arbre (13), un élément de serrage étant agencé dans le manchon de la base (2), un élément de serrage complémentaire étant agencé sur l'arbre (13) pour une sécurisation détachable sur l'élément de serrage, lorsque l'ensemble pivotant (1) est tiré sur une position la plus basse, l'ensemble pivotant (1) est à même de pivoter à 180 degrés par rapport à l'arbre (13) et l'arbre (13) pénètre à nouveau le manchon de la base (2).

2. Le mécanisme pivotant de la revendication 1, **caractérisé en ce que** l'ensemble pivotant (1) comprend en outre deux verrous (16) s'étirant vers l'extérieur, et deux boutons poussoirs (15) pour respectivement verrouiller ou déverrouiller les verrous (16).

3. Le mécanisme pivotant de la revendication 1, **caractérisé en ce que** le bloc de positionnement coulissant (11) est doté de deux épaulements configurés pour s'insérer de façon verrouillée dans le premier réceptacle limitatif (17) ou le deuxième réceptacle limitatif (14).

4. Le mécanisme pivotant de la revendication 1, **caractérisé en ce que** le bloc de positionnement coulissant (11) comporte une rainure de fond configurée afin de pouvoir y loger une main.
